# EUROPEAN PATENT APPLICATION

(11) **EP 1 916 816 A1**
(43) Date of publication of application: **30.04.2008**
(21) Application number: 06022378.1
(22) Date of filing: 26.10.2006
(51) Int. Cl.: H04L 29/06

(54) **Method and devices to establish a public communication session**

(71) Applicant: Alcatel Lucent, 75008 Paris (FR)
(72) Inventor: Schwan, Nico, 70190 Stuttgart (DE); Domschitz, Peter, 70191 Stuttgart (DE); Tomsu, Marco, 71254 Ditzingen (DE); Riemer, Joachim, 70499 Stuttgart (DE)
(74) Representative: Schmidt, Werner Karl

(57) **Abstract**

This application concerns a method for establishing a session between at least two peers (C1, C2), each peer is located inside a realm (R1, R2) that are made public inside a public realm (R), where the realms (R1, R2) ore interconnected with the public realm (R) and where an initial connection is established via a relay (pRl, pR2) in the public realm (R1), the method comprising the steps of detecting whether the peers are inside the same realm for establishing a direct connection inside the same realm. The invention further concerns a client device (C1, C2) and a network device (D) for establishing a session, as well as a communication system therefore.

## Description

This application concerns a method for establishing a session between at least two peers, a corresponding computer software product, a client device a network device, and a communication system, therefore.

Although the networking principles are rather simple, standardized networking architectures like the Internet Protocol (lP) Multimedia Subsystem (IMS), see e.g. http://en.wikipedia.org/wiki/IP_Muttimedia_Subsystem, or communication protocols like Session Initiation Protocol (SIP) (that is a application-layer control (signaling) protocol for creating, modifying, and terminating sessions), see e.g. http://en.wikipedia.org/wiki/Session_Initiation_Protocol, become more complex.

Approaches like peer-to-peer (P2P) technology, which is a network that relies primarily on the resources of the participants in the network rather than concentrating the functionalities in a relatively low number of dedicated network elements like servers, see http://en.wikipedia.org/wiki/Peer-to-peer, ore a new approach to lower platform investments and efforts.

New revolutionary voice and multimedia over IP solutions are emerging, where the signaling and media paths between two user clients go peer-to-peer and involve as little additional infrastructure as possible as described in the International Patent Application WO 2005 009019.

In such Internet-based public communication networks the clients are mostly behind a network address translator (NAT), a firewall, a network border element, a gateway, or any kind of boundary. Usually for hidden clients relays for signaling and media exchange are established. Such a communication across network boundaries via NAT is described in "Peer-to-Peer Communication Across Network Address Translators" of Bryan Ford, Pyda Srisuresh, and Dan Kegel.

They describe that NAT causes difficulties for P2P communication, since the peers involved may not be reachable at any globally valid IP address. Several NAT traversal techniques are known and the paper analyzes especially one of the simplest but most robust and practical NAT traversal techniques, known as hole punching. Hole punching is moderately well-understood for User Datagram Protocol (UDP) communication. It is also shown that hole punching can reliably be used to set up peer-to-peer Transmission Control Protocol (TCP) streams as well. (UDP and TCP are the main members of the set of Internet protocol suite.)

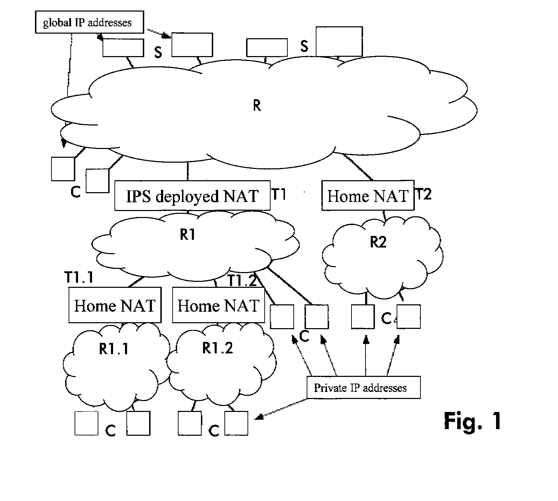

When trying to introduce two peers, that is the phase of a communication establishment where the peers become aware of each other, the known techniques have to cope with a complex environment comprising multiple realms as shown in Fig. 1.

There is a practically important special case, where the clients are inside the same (private) realm, e.g. in an intranet of an organization, the domain of a service provider, or the intranet of a company. In this case usually media and signaling is relayed via external relays or proxy nodes. This leads to an unneeded indirection, latency, unnecessary load, routing restrictions etc. At least for privacy and cost reasons it could be desired to connect such clients inside the same (private) realm or in general to connect peers with less indirections.

Currently there is no reliable procedure publicly known to detect in any case that if two clients are in the same (private) realm for establishing a direct P2P link for signaling and media:

For instance Simple Traversal of User Datagram Protocol (UDP) Through NAT (STUN), which is a network protocol allowing a client behind a NAT (or multiple NATs) to find out its public appearance, cover not all cases of two clients inside the same realm, especially when several NAT/firewalls/proxies are used to interconnect the private realm with the Internet. Protocol-aware intelligent signaling helper nodes are required in the public network. These nodes need to be aware of the signaling protocol and analyze or even change messaging or payload.

Traversal Using Relay NAT (TURN) allows for an element behind a NAT or firewall to receive incoming data via TCP or UDP. It is most useful for elements behind symmetric NATs or firewalls that wish to be on the receiving end of a connection to a single peer. TURN does not allow users to run servers on well-known ports if they ore behind a NAT; it supports the connection of a user behind a NAT to only a single peer. In that regard, its role is to provide the same security functions provided by symmetric NATs and firewalls, but to turn the tables so that the element on the inside can be on the receiving end, rather than the sending end, of a connection that is requested by the client. In the SIP context it is used only for the media path ignoring the huge signaling complexity.

In the following the term realm is synonym for a (administratively) separated network, i.e. a network behind a boundary like a NAT, a gateway, a firewall, etc. The realm has usually its own address space.

The term session is synonym for a lasting connection using the session layer of a network protocol or a lasting connection between a user (or user agent) and a peer, typically a server, usually involving the exchange of many packets between the user's computer and the server. A session endpoint for TCP or UDP is usually an IP address, port number pair in the context of IP traffic. In these cases a particular session is uniquely identified by its two session endpoints. From the perspective of one of the hosts involved, a session is effectively identified by the 4-tuple (local IP, local port, remote IP, remote port). The direction of a session is normally the flow direction of the packet that initiates the session: the initial SYN packet for TCP, or the first user datagram for UDP.

The problem of establishing a session between at least two peers, where each peer is located inside a realm is solved by a method, where each peer inside a realm is made public inside a public realm, where the realms are interconnected with the public realm, where on initial connection is established via a relay in the public realm, and where the method comprising the steps of detecting whether the peers are inside the same realm for establishing a direct connection inside the same realm.

This problem is solved inter alia by a computer software product comprising programming means that are adapted to perform the method.

And this problem is solved by a client device hosting one peer of the peers, where the peer is adapted to perform the method.

And the problem is solved by a network device for establishing a session between at least two clients, where the clients comprising peers, and where the network device is especially adapted to exchange information supporting the method.

In common the problem is solved by a communication system, i.e. a private realm, which comprises at least a client and a network device according to the invention.

The invention has the advantage of that it is especially applicable for standard SIP message exchange and that no protocol extension is necessary. Optional message tags can be used to exchange the necessary information via a usual infrastructure.

Signaling and message flows are optimized since no dispensable instances are involved. Traffic is kept local, i.e. inside a private realm.

This goes hand in hand with on increased privacy within the private realm.

The further details of this invention are successively carried out using the figures:
Fig. 1 shows a usual realm topology according to the art.
Fig. 2 shows the usual communication collaboration between clients in separate realms according to the art.
Fig. 3 shows a detailed picture which sessions are established when using the method according to the art.
Fig. 4 shows the communication routes when using the method according to the art in the case where the clients are located in the same realm.
Fig. 5 shows the application of hole punching in the former mentioned case according to the art.
Fig. 6 shows a communication route when using the method according to the invention.
Fig. 7 illustrated the detection of the case where the clients ore not in the same realm.
Fig. 8 shows a detailed message sequence chart how to enhance a SIP messaging to implement the method according to the invention.

Fig. 1 shows a public realm R, like the Internet comprising servers S and clients C having a global IP address that identifies the client C or the server S inside the realm uniquely. Beside that there are dedicated border elements T1 and T2 of the public realm R shown. These are usual NATs establishing an address domain adaptation between the public realm R and further (private) realms R1 and R2 each itself comprising clients C - now with an address that uniquely identifies a client inside its (private) realm. The first realm R1 of the two private realms R1 and R2 comprises in advance further boundary elements T1.1 and T1.2 establishing in advance address translation between further private realms R1.1 and R1.2. All the realms R, R1, R2, R1.1, and R1.2 comprise clients C having either a unique global address or a unique local address. The border elements T1, T2, T1.1, and T1.2 are responsible to resolve necessary address translation such that the clients C can establish a session and can communicate to each other.

Although the realms are shown as a hierarchy, is not necessary that they establish a hierarchy, i.e. two potential leaf realms might share a border element, hence establishing a cycle.

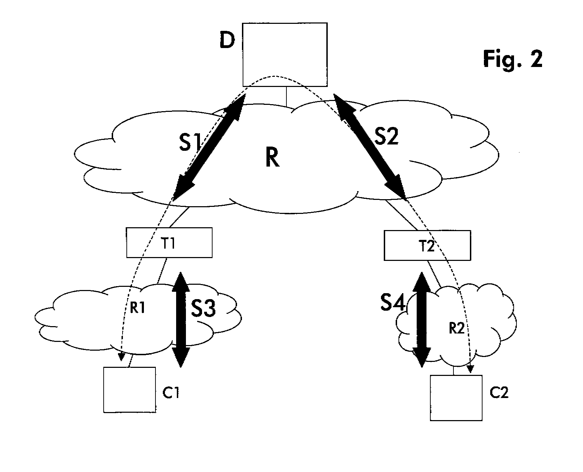

Fig. 2 shows the typical communication, i.e. the sessions, between two clients C1 and C2. A session initialization is prepared by making the hidden clients public. The simplest way would be to give each client a public address - but there are not enough addresses left, since usually address spaces are limited. Hence the clients advertise themselves in a dictionary D. Suppose in the following the first client C1 is called Alice and the second client C2 is called Bob.

When Alice C1 intends to reach Bob C2, Alice C1 has to look up the address of BobC2 for establishing a connection and especially for instructing the boundary elements T1 and T2 accordingly. Usually this is done by establishing a session between relays inside the public realm R. For simplicity reasons this relay coincides with the directory D. Suppose the relay D has the public address pD, the border element T1 hiding Alice C1 has the public address pT1, and the border element T2 hiding Bob C2 has the public address pT2. The clue is now that the relay D and the border elements T1 and T2 as well as the clients C1 and C2 are configured dynamically, i.e. sessions are established on a call basis.

In the afore mentioned scenario the following sessions will be established: a first session 53, namely (prC1, prT1) inside the private realm R1 of Alice, where the border element T1 has the private address prT1 and the client C1 has the private address prC1. Accordingly inside the private realm R2 of Bob C2 a session S4 (prC2, prT2) is established. Inside the public realm R, a session S1 between the relay D and the border element T1, say (pT1, pD) and a session S2 between the relay D and the border element T2, say (pT2, pD) is established. In this configuration the two clients C1 and C2 can communicate via the relay D in the public network R using the border elements T1 and T2, which is shown by the dashed double arrow.

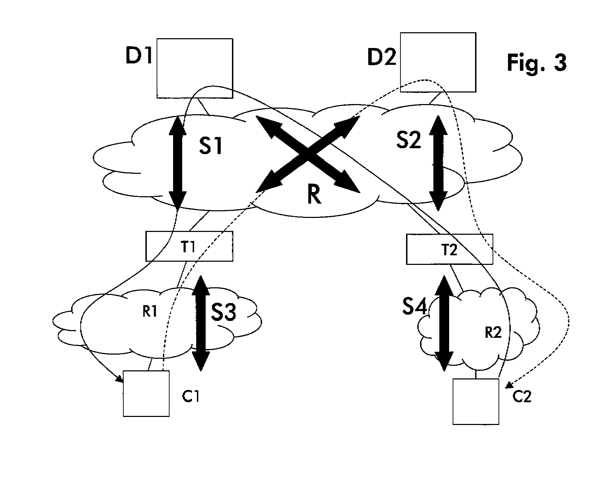

Assuming a bidirectional session for the sake of simplicity. Fig. 3 shows that things become even worse when each client has a different relay D1 and D2 appointed, i.e. the flow from Alice C1 to Bob C2 is established via Alice's realm's border element T1 to Alice's relay D1 to Bob's realm's border element T2 to Bob C2. And accordingly Bob's flow starts at Bob C1, over Bob's realm's border element T2, to Bob's relay, to

Alice's realm's border element T1, and finally to Alice C1. This requires beside a lot of words a lot of resources.

In IMS the directory is the Home Subscriber Server (HSS) and the Call Session Control Function (CSCF) implements the relay.

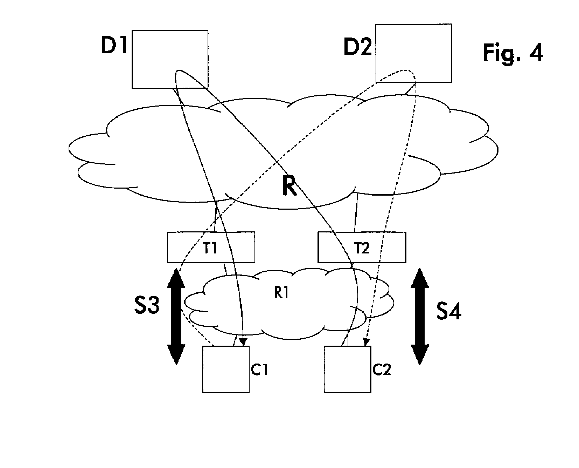

When Alice C1 and Bob C2 ore located in the same realm this leads to the situation shown in Fig. 4. The two clients C1 and C2 have no chance to recognize that they share the some private realm R1, instead they communicate via relays D1 and D2 in a public realm R using the above-described method, yielding to a bit wire communication path.

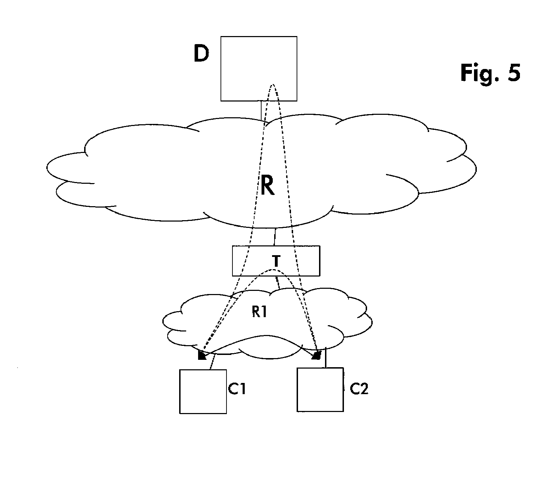

The above-described hole punching technique is depicted in Fig. 5. The hole punching technique establishes a communication between two parties in the same realm via an unrestricted third-party server, i.e. the above-mentioned dictionary D that uncovers external and internal address information for them. Since each client initiated the request to the server, the server knows their addresses and port numbers assigned for that session, which it shores one to the other. Having valid port numbers causes the firewalls to accept the incoming packets from each side.

Suppose Alice C1 wants to establish for instance a UDP session directly with client Bob C2. Hole punching proceeds as follows: Alice C1 initially does not know how to reach Bob C2, so Alice C1 asks a directory D in a public realm R for help establishing a UDP session with Bob C2. The directory D replies to Alice with a message containing Bob's public and private endpoints. At the same time, the directory D uses its UDP session with Bob C2 to send a connection request message containing Alice's public and private endpoints. Once these messages are received, Alice C1 and Bob know each other's public and private endpoints. When Alice C1 receives Bob's public and private endpoints from the directory D, Alice C1 starts sending UDP packets to both of these endpoints, and subsequently locks in whichever endpoint first elicits a valid response from Bob C2. Similarly, when Bob C2 receives Alice's public and private endpoints in the forwarded connection request, Bob C2 starts sending UDP packets to Alice C1 at each of Alice's known two endpoints, locking in the first endpoint that works. The order and timing of these messages are not critical as long as they are asynchronous.

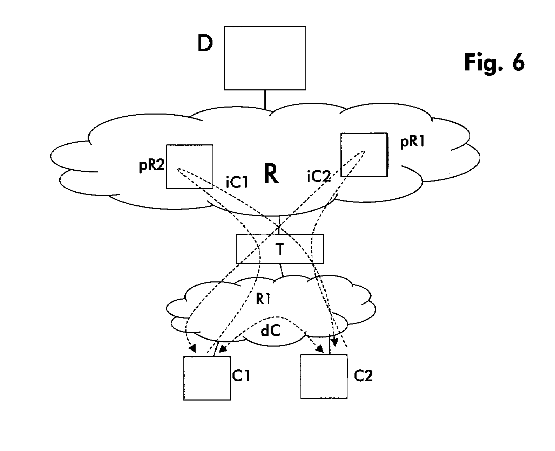

Fig. 6 shows a scenario where Alice C1 intends to establish connection to Bob C2, peer-to-peer direct connection dC in a private realm R1. Therefore, Alice C1 first queries the dictionary D in the public realm R (or at least a proxy of the directory D in the private realm) using the usual NAT traversals via a boundary elements T. This is done to identify Bob's relay pR2 in the public realm R. Alice C1 sends an invitation to the relay pR2 and the relay pR2 forwards the invitation to Bob C2 via a or the same (or an equivalent other as shown in Fig. 4) border element T of the private realm R1. And this without the knowledge that the two clients (user agents) Bob C2 and Alice C1 are located in the same realm R1. Bob C1 then responds Alice's relay to the invitation. Thus the signaling path of the way back needs not necessarily to be equal to the way forward.

As shown, the clients C1 and C2 are assumed to be in the some private realm R1 and they have public contact point relays.

In this situation it is preferably that the signaling and the media path are routed peer-to-peer and do not make an indirection via the relay(s). This is reached by exchanging information that enables the clients Alice C1 and Bob C2 to find out if they can communicate directly with each other without the need of an additional instance.

The scenario starts with a relayed request by Alice C1 needing a public relay pR2 of Bob C2. When this request was successful, Bob C2 and its relay pR2 maintain a secured keep alive connection wherein the relay continuously learns the ephemeral public address of Bob that is allocated for the connection. Subsequently Bob C2 registers the public address (of pR2) in the dictionary. Similarly Alice C1 performs this procedure as well.

To invite, Alice C1 queries the dictionary D for the location information of Bob C2, which results in the public relay pR2 of Bob C2. Alice C1 allocates a media relay which likewise results in a secured keep alive connection between Alice C1 and its media relay pR1.

Alice's invitation could e.g. comprise information about the intended connection type, e.g. to go end-to-end via the private address. The invitation might further contain contact information, e.g. the public address or the relay address. And in advance the invitation might contain media descriptions, e.g. one for the private media endpoint and one for the public media relay.

Thus all private and public information that is needed for the connection setup could be included in a session invitation.

The invitation is forwarded to Bob C2 by its public relay pR2. Optionally, Bob C2 then may generates a trying response, which is replied to the public address of Alice C1. This is done for the reason that provisional response should reach Alice C1 as soon as possible. This message will reach Alice C1 in any case, no matter if the both clients Alice C1 and Bob C2 are in the same subnet or not.

Subsequently Bob C2 requests a media relay similarly as Alice C1 did before. Then Bob C2 generates its first acceptance response to the invitation of Alice C1. This message is intended to reach Alice C1 peer-to-peer. It is addressed using the private address of Alice C1.

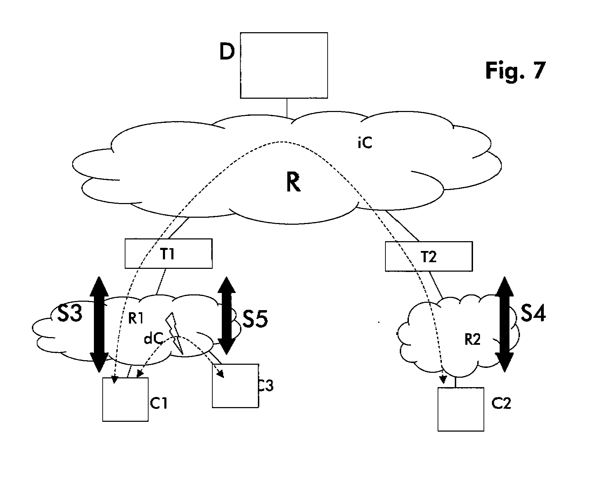

Figure 7 shows the case where the response is not received by Alice C1 but by another client C3, Mallory say. The response to Alice's request is discarded, since in the view of Mallory the corresponding context is missing, i.e. there is no corresponding dialog. Bob C2 recognizes this lack of dialog either after a time-out event or derives the knowledge from a mismatch reply (that could occur in the rarely case when Mallory C3 has an identical address as Bob C2 but in a different domain R1. The flash sign shows the detection that the assumed direct connection is inexistent.

Otherwise, i.e. in the scenario of Fig. 6, Alice C1 would receive the acceptance response by its valid destination address via a direct connection dC inside the private realm R1. Thus Alice C1 would receive the correct endpoints for a peer-to-peer communication dC and may accordingly reply with a further acknowledge.

As shown in Fig. 7, if Alice is not in the same private realm R1 as Bob C2, Bob C2 generates after recognizing this a second acceptance response with his public endpoint. This message is then sent to the public relay pR1 of Alice C1, which forwards it finally to Alice C1.

In this case Alice C1 will know that it has to contact the relay pR2 of Bob C2 in order to communicate with him. Alice C1 generates the acknowledge message and dispatches it. Both clients C1 and C2 know after according to this protocol if they are located in the same subnet or not and they both have the contact information of each other.

This information can in advance be used to start a media or signaling flow either including the media relays pR1 and pR2 or directly inside the private realm R1.

Subsequent signaling message can be routed as learned in the described procedure, for example the session termination and the related acknowledge finishing the session.

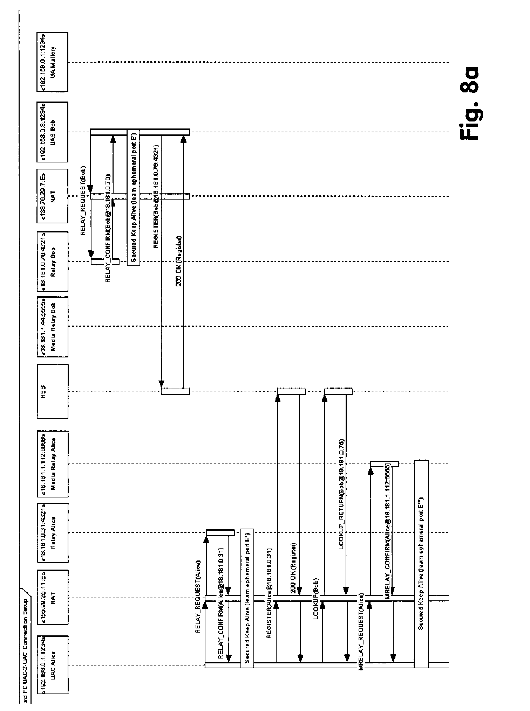

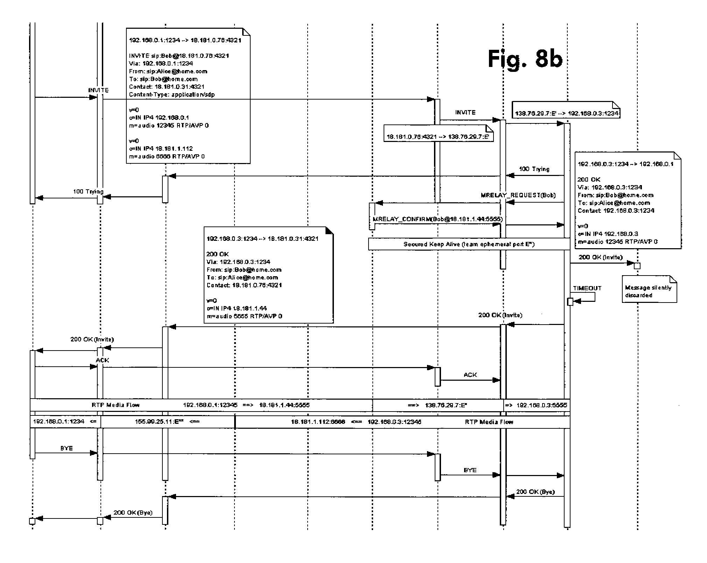

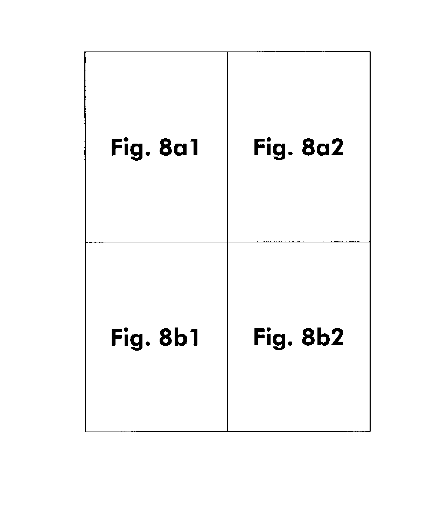

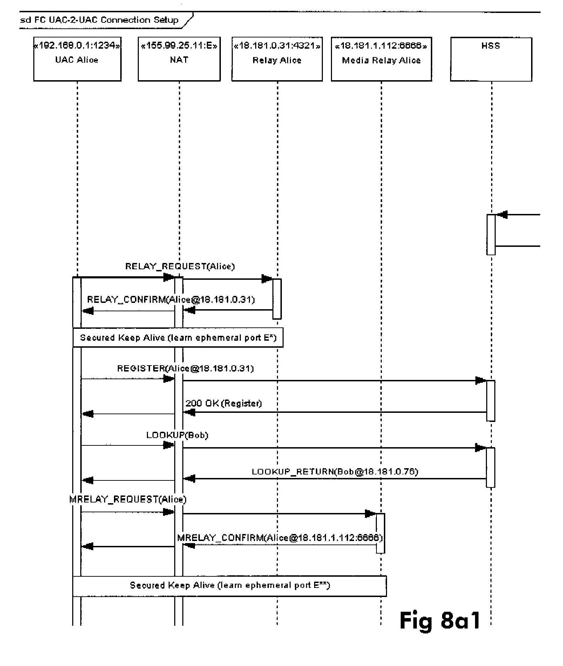

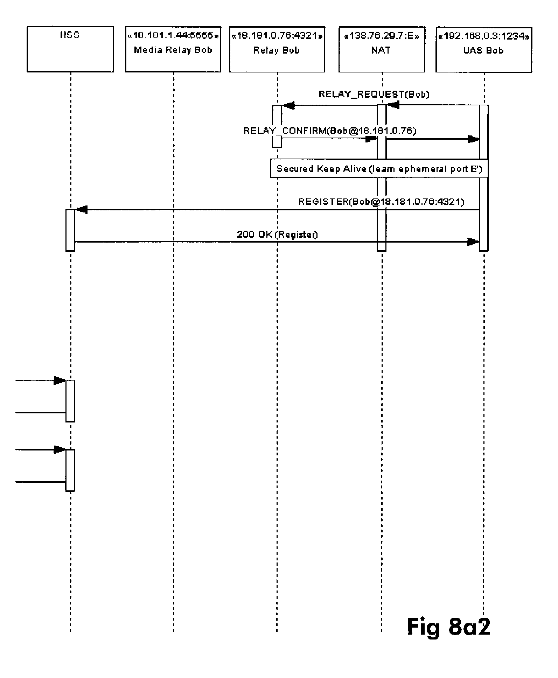

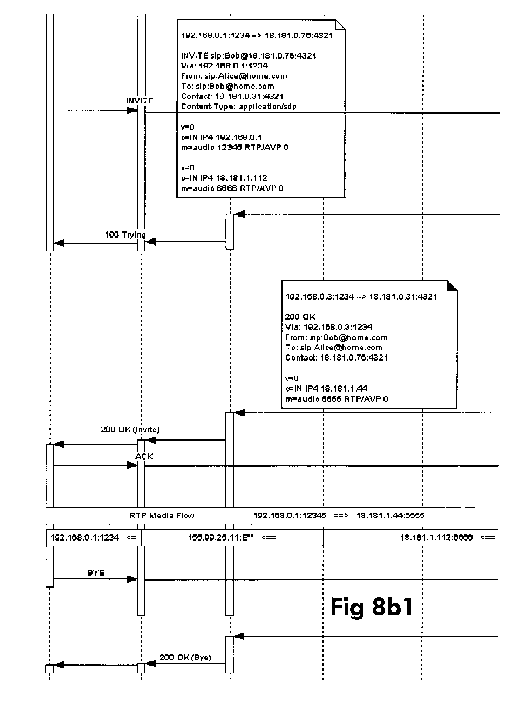

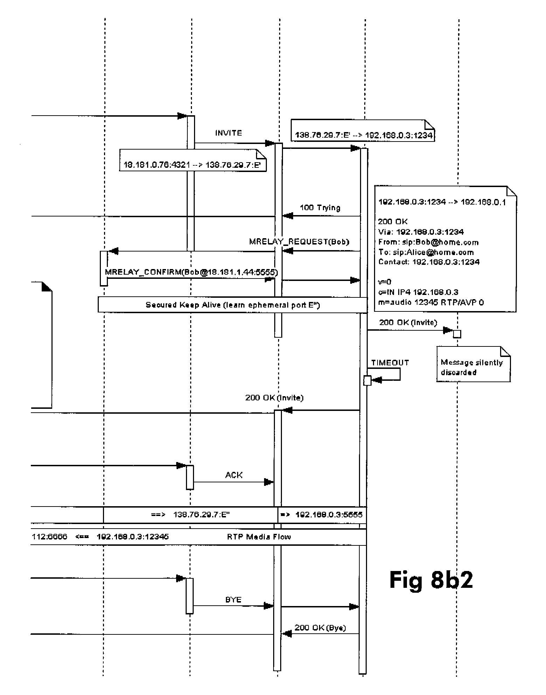

Embedding the described protocol into standard SIP is shown by Fig 8a and Fig 8b constituting Fig. 8. Fig. 8 shows a SIP message sequence chart of the embedding.

The scenario starts with a relay request by Bob, as he needs a public relay. When this request was successful, Bob and its relay maintain a secured keep alive connection wherein the relay continuously learns the ephemeral port E* that the NAT of Bob allocates for the connection. Subsequently Bob registers the public IP:Port bundle that its relay assigned to him in the HSS. Similarly Alice performs this procedure as well.

To invite, Alice queries the HSS for the location information of Bob, which results in the public relay of Bob. Alice allocates a media relay, which likewise results in a secured keep alive connection between Alice and its media relay.

Alice sends the INVITE message to Bob containing the fields:
· Via: As P2PSIP is intended to go end-to-end the via field contains the private IP:Port bundle of the UAC
· Contact: The contact field contains the public IP:Port bundle the relay assigned to the UAC
· SDP: The SDP contains two media descriptions, one for the private media endpoint and one for the public media relay

Thus all private and public information that is needed for the call setup is included in the INVITE message.

The message is forwarded to Bob by its public relay. Bob then generates a 100 Trying response, which he sends to the public address of Alice for the reason that this provisional response should reach Alice as soon as possible. This message will reach Alice in any case, no matter if both user agents (UAs) are in the same subnet or not.

Subsequently Bob requests a media relay similarly as Alice did before. Then Bob generates its first 200 OK response to the INVITE message of Alice. This message is intended to reach Alice peer-to-peer, thus it contains the private endpoints for signaling in the SIP header and the private endpoint for media in the SDP payload.

If another UA Mallory receives the message, the message is discarded, as it has no corresponding SIP dialog. Bob recognizes this after a short-time TIMEOUT event. Otherwise, a 200 OK message would be received by its valid destination Alice. Thus Alice would receive the correct endpoints for a peer-to-peer communication and may accordingly send the ACK message.

If Alice is not in the same subnet as Bob, Bob generates after the TIMEOUT event a second 200 OK message with his public endpoint for signaling in the SIP header and its public media endpoint in the SDP payload. This message is then sent to the public relay of Alice, which forwards it to the UAC Alice.

In either case Alice knows that it has to contact the relay of Bob in order to communicate with him. Alice generates the ACK message and dispatches it. Now both UAs know if they are located in the same subnet or not and they both have the contact information of each other.

This information is used to start the RTP flow either including the media relays or not. Also every subsequent signaling message is routed as learned in the described procedure, for example the BYE and the related 200 OK messages to finish the call.

In cases a local connection is likely, e.g. in the case of common public IP address, it is useful to use the local connectivity directly. Only in the unlikely case of a connectivity problem (timeout event) the public relays would be involved.

The investigated connection topology information, i.e. public addresses and private addresses and networking information, can be advantageously cached for further session establishments.

In case of a positive pre-knowledge of locality, the initial involvement of the relays can be omitted - only if unexpected problems (timeouts) occur the relays will be involved. In case of a former negative locality test, the topology exploration and related timeout delay can be skipped - i.e. a standard call establishment with unconditional relay involvement will be performed.

The topology information stored is valid until the own local address changes.

## Claims

1. A method for establishing a session between at least two peers (C1, C2), each peer is located inside a realm (R1, R2) that are made public inside a public realm (R), where the realms (R1, R2) ore interconnected with the public realm (R) and where on initial connection is established via a relay (pR1, pR2) in the public realm (R1), **characterized in that** the method comprising the steps of detecting whether the peers are inside the same realm for establishing a direct connection inside the same realm.

2. The method according to claim 1, **characterized in that** an initial session is established via the public realm and where the initial session (S1, S2, S3, 54) is used for exchanging information of a peer's realm (R1, R2).

3. The method according to claim 2, **characterized in that** the information of a peer's realm (R1, R2) comprises a peer's public address and a peer's private address.

4. The method according to claim 3, **characterized in that** the peer's private address is used by another peer (C2) to detect whether there exists a direct session inside one realm (R1).

5. The method according to claim 4, **characterized in that** a detection whether there exists a direct session (dC) inside one realm comprises an invitation using the private address of a peer (C2) that is accepted by this peer (C2) for establishing the direct session or rejected if the peer (C2) is not reachable inside the private realm.

6. A computer software product **characterized by** comprising programming means that are adapted to perform the method according to claim 1, 2, 3, 4, or 5.

7. A client device (C1, C2, C) for establishing a session between at least two peers, where the device hosts one peer (C1, C2) of the at least two peers (C 1, C2), **characterized in that** the one peer is adapted to perform the method according to claim 1, 2, 3, 4, or 5.

8. A network device (D) for establishing a session between at least two clients (C1, C2), where the clients (C1, C2) comprising peers, **characterized in that** the network device is adapted to exchange information according to the steps of the method according to claim 1, 2, 3, 4, or 5.

9. A communication system, **characterized by** comprising at least a client (C1, C2) according to claim 7 and a network device (D) according to claim 8.

## Amended claims

### Amended claims in accordance with Rule 137(2) EPC.

**1.** A method for establishing a session between at least two peers (C1, C2), each peer is located inside a realm (R1, R2) that are made public inside a public realm (R), where the realms (R1, R2) are interconnected with the public realm (R) and where an initial connection is established via a relay (pR1, pR2) in the public realm (R1), **characterized in that** the method comprising the steps of detecting whether the peers are inside the same realm for establishing a direct connection inside the same realm by using the peer's private address is used by another peer (C2) to detect whether there exists a direct session inside one realm (R1).

**2.** The method according to claim 1, **characterized in that** an initial session is established via the public realm and where the initial session (S1, S2, S3, S4) is used for exchanging information of a peer's realm (R1, R2).

**3.** The method according to claim 2, **characterized in that** the information of a peer's realm (R1, R2) comprises a peer's public address and a peer's private address.

**4.** The method according to claim 3, **characterized in that** a detection whether there exists a direct session (dC) inside one realm comprises an invitation using the private address of a peer (C2) that is accepted by this peer (C2) for establishing the direct session or rejected if the peer (C2) is not reachable inside the private realm.

**5.** A computer software product, **characterized by** comprising programming means that are adapted to perform the method according to claim 1.

**6.** A client device (C1, C2, C) for establishing a session between at least two peers, where the device hosts one peer (C1, C2) of the at least two peers (C1, C2), **characterized in that** the one peer is adapted to perform the method according to claim 1.

**7.** A communication system comprising a network device (D) that is adapted to exchange information according to the steps of the method according to claim 1, **characterized by** comprising at least a client device (C1, C2) according to claim 5.
